# EUROPEAN PATENT APPLICATION

(11) **EP 2 079 198 A1**
(43) Date of publication of application: **15.07.2009**
(21) Application number: 07785418.0
(22) Date of filing: 06.08.2007
(51) Int. Cl.: H04L 12/56, H04L 29/06, H04L 12/26

(54) **METHOD AND EXCHANGER FOR REALIZING INTERNET GROUP MANAGEMENT PROTOCOL SNOOPING**

(30) Priority: 07.11.2006 CN 200610144404
(71) Applicant: Huawei Technologies Co., Ltd., Shenzhen, Guangdong Province 518129 (CN)
(72) Inventor: XU, Xiaohu, Shenzhen Guangdong 518129 (CN)
(74) Representative: Körber, Martin Hans
(86) International application number: PCT/CN2007/070425
(87) International publication number: WO 2008/055427

(57) **Abstract**

A method and switch for Internet Group Management Protocol (IGMP) snooping are disclosed. The method includes: configuring, by a switch, a router interface listed in an IGMP snooping table; configuring, by the switch, a multicast forwarding table entry and a corresponding outgoing interface list; and configuring, by the switch, interfaces which are adjacent to switches in the outgoing interface list. The advantage of the invention is the rapid recovery of the multicast data packets forwarding in the loop network when the network topology of the Layer Two loop network changes.

## Description

### FIELD OF THE INVENTION

The disclosure relates to communication technology, and more particularly, to a method and switch for implementing the Internet Group Management Protocol (IGMP) snooping in Ethernet network.

### BACKGROUND

In a conventional Ethernet network, when a switch forwards multicast data packets to hosts, all its interfaces are flooded with them. That is, the received multicast data packets are forwarded to each interface of the switch, even if there is no any host which is interested in the multicast data packets and is connected to interface, so the bandwidth is not effectively utilized.

Internet Group Management Protocol (IGMP) snooping is run on the Ethernet switch to optimize the multicast forwarding. By dynamically intercepting and analyzing an IGMP message between the host and the router, a switch with IGMP snooping function determines to which interfaces the multicast data packets of which multicast groups should be forwarded. An entry is created in its multicast forwarding table, which lists the outgoing interfaces corr esponding to each multicast group. When the multicast data packets of a multicast group are required to be forwarded to an interface, the interface may be added to the outgoing interface list corresponding to the multicast group in the multicast forwarding table entry.

Specifically, when the switch snoops an IGMP membership report message, the interface through which the message is received should be added to the outgoing interface list of the corresponding multicast forwarding table entry. When the switch snoops an IGMP leave message, the interface through which the message is received should be deleted from the outgoing interface list of the corresponding multicast forwarding table entry.

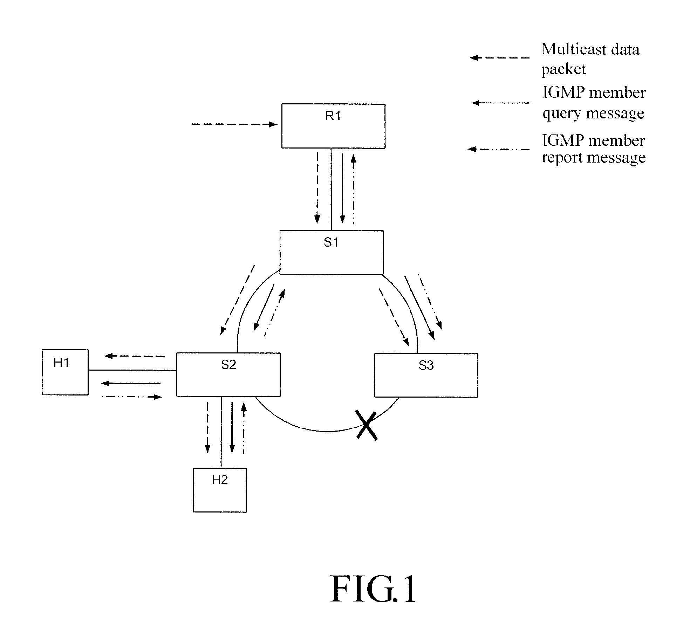

Fig. 1 illustrates a schematic diagram of a conventional network configuration for realizing IGMP snooping in an Ethernet network. It is assumed that the Ethernet network shown in Fig. 1 runs the Spanning Tree Protocol (STP) to avoid loop. IGMP snooping is enabled on switch S1, S2 and S3. S1 is connected to a router R1, and hosts H1 and H2 are connected to S2. The STP blocks the link between S2 and S3 so as to prevent a loop.

Because the IGMP protocol is enabled on the interface of the router R1, which is connected to S1, the router R1 periodically transmits an IGMP query message to determine whether there is any member for some multicast group. Upon receiving the IGMP query message from the R1, the IGMP snooping modules of S1, S2 and S3 add the interfaces from which the message is received to the router interface list of their IGMP snooping tables respectively.

Switch S2 forwards the received IGMP query message to all of its interfaces. When hosts H1 and H2 connected to S2 receive the IGMP query message, they generate an IGMP member report message so as to join a multicast group, e.g. multicast group G. Upon receiving the IGMP member report message, S2 creates a new entry in its multicast forwarding table and adds the interfaces, from which the IGMP member report message is received, into the outgoing interface list of that entry.

Switch S2 forwards the IGMP member report message to Switch S1 through the router interface indicated in the router interface list. Upon receiving the message, S1 also creates a new entry in its multicast forwarding table and adds the interfaces, from which the IGMP member report message is received, into the outgoing interface list of that entry. Then S1 forwards the IGMP member report message to the router R1 through a router interface. Upon receiving the above message, the R1 forwards the multicast data packets of multicast group G to switch S1, and S1 forwards the multicast data packets to the interfaces in the outgoing interface list of the multicast forwarding entry corresponding to multicast group G. Similarly, switch S2 forwards the multicast data packets to the interfaces in the outgoing interface list of the multicast forwarding entry corresponding to multicast group G.

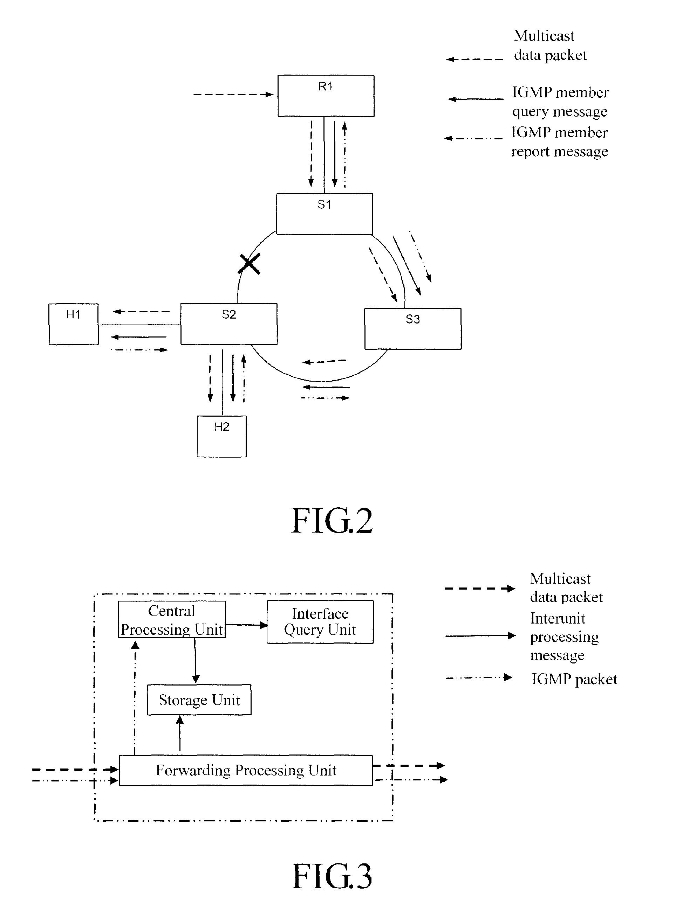

When implementing the present invention, the inventor of the invention had the following findings: in the above prior arts, once the network topology of the Ethernet network changes, the forwarding of the multicast data packets is temporarily interrupted. For example, assuming the link between S1 and S2 is disconnected; STP again converges and computes a new spanning tree. It restores the link between S2 and S3 to forwarding state, as shown in Fig. 2. However, because the timer of the IGMP querier of the router R1 is not expired, the R1 does not transmit the IGMP query message at once. Until receiving any IGMP query message, H1, H2 does not transmit the IGMP member report message anymore. The multicast data packets are still forwarded according to the multicast forwarding table. As a result, in the outgoing interface list corresponding to the multicast group in the switch S3, there is no outgoing interface corresponding to the switch S2. So S3 would directly discard the multicast data packets received from router S 1. The IGMP query message is transmitted again after the timer of IGMP querier is expired. Hosts H1 and H2 respond to the IGMP query message and transmit the IGMP member report message. Till then, hosts H1 and H2 can receive the multicast data packets.

### SUMMARY OF THE INVENTION

An embodiment of the disclosure provides a method and switch for implementing IGMP snooping in a loop network, which can rapidly recover the normal forwarding of multicast data packets when the topology of the loop network changes.

To achieve the above object, the embodiment of the disclosure provides: a method for implementing IGMP snooping, including: configuring, by a switch, a router interface listed in an IGMP snooping table; configuring, by the switch, a multicast forwarding table entry and a corresponding outgoing interfaces list; and configuring, by the switch, interfaces which are adjacent to switches, in the outgoing interface list.

The invention also provides a switch for implementing IGMP snooping, comprising: a central processing unit, a storage unit and an interface query unit. The storage unit is adapted to store a multicast forwarding table entry including an outgoing interface list and an IGMP snooping table; the interface query unit is adapted to query interfaces which are connected to neighboring switches; and the central processing unit is adapted to establish a multicast forwarding table entry and a corresponding outgoing interface list according to the received IGMP member report message and to add a router interfaces to the IGMP snooping table according to an IGMP query message.

The advantage of the present invention lies in that it can realize the forwarding of multicast data packets in the Ethernet network and can recover the forwarding of the multicast data packets rapidly when the topology of the Ethernet network changes.

### BRIEF DESCRIPTION OF THE DRAWINGS

Fig. 1 illustrates a schematic diagram of a prior art network configuration for realizing IGMP snooping in an Ethernet network;

Fig. 2 illustrates a schematic diagram of a network configuration which is formed by changing the network topology as shown in Fig. 1; and

Fig. 3 is a schematic structure diagram of a switch according to an embodiment of the disclosure.

### DETAILED DESCRIPTION OF PREFERRED EMBODIMENTS

In the following, an implementation procedure of the IGMP snooping method according to an embodiment of the disclosure and a switch used for the embodiment are described with reference to the Ethernet network shown in Fig. 1 and 2 as well as the embodiment shown in Fig. 3.

As discussed in the above, the STP runs on the Ethernet network shown in Fig. 1. IGMP snooping is enabled on the switches S1, S2 and S3. The switch S1 is connected to the router R1, and the hosts H1 and H2 are connected to the switch S2. The STP blocks the link between the switches S2 and S3.

The router R1 periodically transmits the IGMP query message to query which multicast groups under each switch in the loop network have members. Upon receiving the IGMP query message from the router R1, the IGMP snooping modules of the switches S1, S2 and S3 add the interfaces receiving the IGMP query message to the router interface lists in their local IGMP snooping tables respectively; and the switches S2 and S3 continue to flood the IGMP query message.

Upon receiving the IGMP query message, the hosts H1, H2 transmit the IGMP member report message to the switch S2 to indicate their joining of a multicast group, such as multicast group G. Upon receiving the message, a central processing unit of the switch S2 establishes a multicast forwarding table entry and stores the multicast forwarding table entry in a storage unit of the switch S2, and sets up an outgoing interface list corresponding to the multicast group G in the multicast forwarding table entry, to record the interfaces from which the IGMP member report message is received. A forwarding processing unit of the switch S2 forwards the IGMP member report message to the switch S 1 according to a router interface listed in the local IGMP snooping table. After the switch S1 receives the IGMP member report message forwarded by the switch S2, a central processing unit of the switch S1 establishes a multicast forwarding table entry and stores the multicast forwarding table entry in a storage unit of the switch S1, and sets up an outgoing interface list corresponding to the multicast group G in the multicast forwarding table entry, to record the interfaces from which the IGMP member report message is received. A forwarding processing unit of the switch S 1 forwards the IGMP member report message to the router R1 according to a router interface listed in the local IGMP snooping table.

An interface query unit of each of the switches S1, S2 and S3 can queries interfaces connected to neighboring switches through STP module. The central processing unit of the switch S1 determines whether the interfaces have been added to the outgoing interface list of the multicast forwarding table entry for multicast group G. If it has been added, the central processing unit of the switch S 1 does not add it again; therefore, the switch S1 only adds the interface connected to switch S3 into the outgoing interface list of the multicast forwarding table entry for multicast group G. Similarly, the switch S2 only adds the interface connected to switch S3 into the outgoing interface list of the multicast forwarding table entry for multicast group G.

Because the switch S3 does not receive the IGMP member report message about the hosts H1, H2 joining the multicast group G, the central processing unit of the switch S3 does not establish the associated multicast forwarding table entry.

The router R1 forwards to the switch S 1 the multicast data packets of the multicast group G requested by the hosts H1 and H2. The forwarding processing unit of the switch S1 forwards the multicast data packets to the interfaces listed in the outgoing interface list of the multicast forwarding table entry for multicast group G. Since the link between the switches S2 and S3 is blocked, the forwarding unit of the switch S3 discards the received multicast data packets; the forwarding processing unit of the switch S2 forwards the multicast data packets to the hosts H1, H2 according to the interface listed in the outgoing interface list corresponding to the multicast group G in the local multicast forwarding table entry.

When the link between the switches S1 and S2 is broken, STP recovers the blocked link between the switches S2 and S3 to forwarding state, as shown in Fig. 2. The forwarding processing unit of the switch S1 forwards the multicast data packets to the interfaces listed in the outgoing interface list corresponding to the multicast group G in the local multicast forwarding table entry. Due to that the link between the switches S1 and S2 is broken; the switches S2 can not receive the multicast data packets. In contrast, upon receiving the multicast data packets, the forwarding processing unit of the switch S3 floods, that is, forwarding the multicast data packets to all the interfaces of the switch S3, because there is no matched multicast forwarding table entry. Thus, the switch S2 receives the multicast data packet through the interface connected to the switch S3. The switch S2 forwards the multicast data packets to the hosts H1, H2 according to the outgoing interface list information of the corresponding multicast forwarding table entry in the local multicast forwarding table entry. As a result, the multicast data packets are transmitted to the hosts H1 and H2 via a new link, that is, switch S1→switch S3→switch S2.

In the embodiment of the disclosure, as shown in the Fig. 2, when the period of transmitting the IGMP query packet by the router R1 expires, the router R1 transmits the IGMP query message again, and the hosts H1 and H2 respond by transmitting IGMP member report message of joining a certain multicast group. The central processing units of the switches S2 and S3 determine whether the interface receiving the IGMP member report message has been added to the outgoing interface list of the multicast group of the local multicast forwarding table entry. The outgoing interface list of the multicast group has been already established in the local multicast forwarding table entry of the switch S2; therefore, the central processing unit of the switch S2 does not add this interface any more. The central processing unit of the switch S3 establishes a new multicast forwarding table entry according to the IGMP member report message and adds the interface to the outgoing interface list.

When a host leaves the multicast group and transmits an IGMP leave message, the switch snoops the IGMP leave message. For example, when the switch and the host both connect to another host via a hub (not shown in Figs. 1 and 2), the interface receiving the message is deleted from the local outgoing interface list. However, if this interface is connected to other switch, the central processing unit does not delete the interface receiving the IGMP leave message. The procedure of deleting an interface is the same to prior arts and is not detailed here.

It should be noted that though the above embodiment of the disclosure is elaborated by taking an Ethernet network running STP as an example, the disclosure should be not limited to it, and may well be applied to other Layer Two Switching networks, such as those running Rapid Ring Protection Protocol (RRPP) and Rapid Spanning Tree Protocol (RSTP).

The above embodiment of the disclosure adds interfaces connected to the neighboring switch into the local outgoing interface list in a dynamical manner. However, based on the teaching of the above embodiment of the disclosure, those skilled in the art may configure the router interface, the multicast forwarding table entry and the outgoing interface list recorded in the storage unit in each switch through the man-machine interface of the switch (not shown in the figures) in a static configuration manner.

Those skilled in the art may appreciated that the steps performed in a single device for implementing the above method may be realized by hardware related to program instructions. The program may be stored in a readable storage medium of the device; and the corresponding steps in the above method are executed when the program is run. The storage medium may be for example a ROM/RAM, a magnetic disk and an optical disc.

The advantage of the present invention is the rapid recovery of the multicast data packets forwarding in the loop network when the network topology of the Layer Two loop network changes.

The above are merely exemplary embodiments of the disclosure, and are not intended to limit the scope of the disclosure.

## Claims

1. A method for implementing Internet Group Management Protocol, IGMP snooping, comprising:
configuring, by a switch, a router interface listed in an IGMP snooping table;
configuring, by the switch, a multicast forwarding table entry and a corresponding outgoing interface list; and
configuring, by the switch, interfaces which are adjacent to switches in the outgoing interface list.

2. The method of claim 1, further comprising:
deleting, by the switch, interfaces which are not adjacent to the switches, from the outgoing interface list, upon receiving an IGMP leave message from these interfaces not adjacent to the switches.

3. The method of claim 1 or 2, wherein the multicast forwarding table entry corresponds to a multicast group which an IGMP member report message requests to join.

4. The method of claim 1 or 2, wherein the configuring a multicast forwarding table entry and a corresponding outgoing interface list comprises:
dynamically establishing, by the switch, the multicast forwarding table entry according to a snooped IGMP member report message; and
adding, an interface from which the IGMP member report message is received to the outgoing interface list of the multicast forwarding table entry.

5. The method of claim 4, wherein the interface from which the IGMP member report message is received comprises:
an interface from which the IGMP member report message transmitted by a host is received; and/or
an interface from which the IGMP member report message transmitted by a switch is received.

6. The method of claim 1 or 2, wherein the configuring the interfaces which are adjacent to the switches in the outgoing interface list comprises:
statically configuring the interfaces which are adjacent to the switches in the outgoing interface list, through a man-machine interface of the switch.

7. The method of claim 1 or 2, wherein the configuring interfaces which are adjacent to the switches in the outgoing interface list comprises:
querying, by the switch, interfaces which are connected to neighboring switches and determining whether the interfaces have been added to the outgoing interface list;
if the interfaces have been added to the outgoing interface list, not adding, by the switch, the interfaces to the outgoing interface list; and
if the interfaces have not been added to the outgoing interface list, adding, by the switch, the interfaces to the outgoing interface list.

8. The method of claim 2, wherein the deleting interfaces which are not adjacent to the switches from the outgoing interface list comprises:
when receiving the IGMP leave message, deleting from the outgoing interface list the interfaces which receive the IGMP leave message and are not adjacent to switches.

9. The method of claim 8, further comprising the following steps after the receiving the IGMP leave message:
determining whether the interface receiving the IGMP leave message is connected to another switch; and
if determining that the interface is connected to another switch, not processing the IGMP leave message.

10. A switch for implementing Internet Group Management Protocol, IGMP snooping, comprising:
a storage unit, adapted to store a multicast forwarding table entry including an outgoing interface list, and an IGMP snooping table;
an interface query unit, adapted to query interfaces which are connected to neighboring switches; and
a central processing unit, adapted to establish the multicast forwarding table entry and a corresponding outgoing interface list according to a received IGMP member report message, and to add router interfaces to the IGMP snooping table according to an IGMP query message.

11. The switch of claim 10, wherein the central processing unit is further adapted to delete from the outgoing interface list an interface which receives an IGMP leave message and is not connected to another switch, according to the IGMP leave message.
